# EUROPEAN PATENT APPLICATION

(11) **EP 4 683 288 A1**
(43) Date of publication of application: **21.01.2026**
(21) Application number: 24784372.5
(22) Date of filing: 03.04.2024
(51) Int. Cl.: H04L 43/0805

(54) **DEVICE DETECTION METHOD AND APPARATUS, DEVICE, AND COMPUTER READABLE STORAGE MEDIUM**

(30) Priority: 07.04.2023 CN 202310382169
(71) Applicant: HUAWEI TECHNOLOGIES CO., LTD., Shenzhen 518129 (CN)
(72) Inventor: SHAO, Yuanhao, Shenzhen, Guangdong 518129 (CN)
(74) Representative: Isarpatent
(86) International application number: PCT/CN2024/085886
(87) International publication number: WO 2024/208290

(57) **Abstract**

This application discloses a device detection method and apparatus, a device, and a computer-readable storage medium, and relates to the field of communication technologies. The method includes: A first device obtains, through a DHCP, a first address of a second device and a second address allocated by the second device to the first device, where the second address is an IP address, and the second device is used as a DHCP server; creates a single-ended detection session based on the first address and the second address; sends a single-ended detection packet to the second device based on establishment of the single-ended detection session, where a source address and a destination address of the single-ended detection packet are the second address; and detects a running status of the second device based on a transmission status of the single-ended detection packet. After the second address is obtained, sending of the single-ended detection packet is automatically triggered, and a detection process does not need to be configured manually, thereby achieving high deployability. Both the source address and the destination address of the single-ended detection packet are the second address. The second device is only used for packet forwarding. Therefore, a device requirement on the second device is low, and universality is high.

## Description

This application claims priority to Chinese Patent Application No. 202310382169.7, filed on April 7, 2023 and entitled "DEVICE DETECTION METHOD AND APPARATUS, DEVICE, AND COMPUTER-READABLE STORAGE MEDIUM", which is incorporated herein by reference in its entirety.

### TECHNICAL FIELD

This application relates to the field of communication technologies, and in particular, to a device detection method and apparatus, a device, and a computer-readable storage medium.

### BACKGROUND

In the field of communication technologies, data communication of a first device is implemented based on an internet protocol (internet protocol, IP) address. The IP address of the first device may be obtained by allocating an IP address selected by a second device from an address pool. The second device dynamically manages and allocates IP addresses in a centralized manner according to a dynamic host configuration protocol (dynamic host configuration protocol, DHCP). When the second device is used to allocate the IP address to the first device, because a running status of the second device affects usage of the IP address allocated by the second device, a device detection method is required to detect the running status of the second device.

### SUMMARY

This application provides a device detection method and apparatus, a device, and a computer-readable storage medium, to detect a running status of a device. Technical solutions are as follows.

According to a first aspect, a device detection method is provided. The method includes: A first device obtains, through a DHCP, a first address of a second device and a second address allocated by the second device to the first device, where the second address is an IP address allocated by the second device to the first device, and the second device is used as a dynamic host configuration protocol server (DHCP server). The first device creates a single-ended detection session based on the first address and the second address. The first device sends a single-ended detection packet to the second device based on establishment of the single-ended detection session, where a source address and a destination address of the single-ended detection packet are the second address. The first device detects a running status of the second device based on a transmission status of the single-ended detection packet.

When the second device completes the allocation of the first address, the first device automatically triggers the sending of the single-ended detection packet, to perform device detection, and no manual configuration is required, thereby achieving high deployability. In addition, both the source address and the destination address of the single-ended detection packet are the second address. The second device is only used for packet forwarding, and only needs to have a routing and forwarding capability. Therefore, a device requirement on the second device is low, and universality is high.

In a possible implementation, obtaining the first address of the second device includes: receiving a dynamic host configuration protocol offer (DHCP offer) packet sent by the second device, where the DHCP offer packet includes the first address of the second device; and extracting the first address of the second device from the DHCP offer packet. The DHCP offer packet is a packet sent when the second device allocates the second address to the first device. The first device may obtain, during address allocation, the first address required for sending the single-ended detection packet, without a need of separately sending the first address. Therefore, the first address is obtained at low costs and high efficiency.

In a possible implementation, before the first device creates the single-ended detection session based on the first address and the second address, the method further includes: returning a request packet to the second device based on the DHCP offer packet sent by the second device, where the DHCP offer packet indicates, to the first device, the second address that can be allocated by the second device, and the request packet indicates that the first device selects the second address allocated by the second device; receiving an acknowledgment packet returned by the second device based on the request packet, where the acknowledgment packet indicates duration for using the second address by the first device; verifying the second address based on the acknowledgment packet; and performing, based on that a verification result of the second address indicates that the first device is allowed to use the second address, an operation of creating the single-ended detection session. After the second device allocates the second address, the first device further verifies the second address, to determine whether the second address is occupied by another device and whether the first device is allowed to use the second address. The first device creates the single-ended detection session based on the second address and the first address only when the second address is allowed to be used. Reliability of the second address is improved through verification, so that communication quality of data communication based on the second address is ensured.

In a possible implementation, detecting the running status of the second device based on the transmission status of the single-ended detection packet includes: determining, based on that the single-ended detection packet returned by the second device is received in a first time period, that the running status of the second device is normal; or determining, based on that the single-ended detection packet returned by the second device is not received in a first time period, that the running status of the second device is abnormal. The first device determines the running status of the second device depending on whether the single-ended detection packet is received in the first time period. A detection process of the second device is simple, thereby achieving high deployability.

In a possible implementation, after the running status of the second device is detected based on the transmission status of the single-ended detection packet, the method further includes: setting the second address as an invalid address based on that the running status of the second device is abnormal. The second address is set as the invalid address, and the second address is restricted in use, to avoid a data loss caused when the first device continues to use, when the running status of the second device is abnormal, the second address to perform data communication, so that communication quality of data communication of the first device is ensured, and reliability of the data communication of the first device is improved.

In a possible implementation, after the running status of the second device is detected based on the transmission status of the single-ended detection packet, the method further includes: sending a single-ended detection packet to the second device again based on that the running status of the second device is abnormal; and determining the running status of the second device based on a transmission status of the single-ended detection packet. Even if the second device is faulty, the second device still continues to be detected, to obtain the running status of the second device in time.

In a possible implementation, after the running status of the second device is determined based on the transmission status of the single-ended detection packet, the method further includes: applying to the second device for a third address based on that the running status of the second device is normal and the second address is the invalid address, where the third address indicates a network location of the first device. When the second device is restored to normal, the third address is applied for in time, to restore the data communication of the first device based on the third address. In this way, the first device completes fast restoration of the data communication, and time of restoring the data communication is short and efficiency is high.

In a possible implementation, the first address is a medium access control (medium access control, MAC) address. When the second address is the IP address, the first address may be a MAC address, and the first address and the second address may be addresses of different types. An address type in a device detection process is not limited, and flexibility is high.

In a possible implementation, the single-ended detection packet is a single-ended bidirectional forwarding detection (bidirectional forwarding detection, BFD) packet or a single-ended network quality analysis network quality analysis (network quality analysis, NQA) packet. A type of the sent single-ended detection packet is not limited, and universality is high.

In a possible implementation, the DHCP is a dynamic host configuration protocol for internet protocol version 6 (dynamic host configuration protocol for internet protocol version 6, DHCPv6). The device detection method provided in this application is applicable to a DHCPv6 protocol scenario, and is widely applicable.

In a possible implementation, the second device is further used as a gateway. In addition to being used as the DHCP server, the second device may also be used as a gateway, and has various functions.

In a possible implementation, the second device is one of a plurality of gateways, and a virtual router redundancy protocol (virtual router redundancy protocol, VRRP) is deployed between the plurality of gateways. Service reliability of a second device side is improved by configuring a redundant networking structure.

In a possible implementation, that the first device sends a single-ended detection packet to the second device based on establishment of the single-ended detection session includes: The first device configures a session parameter of the single-ended detection session, where the session parameter includes a detection periodicity and a quantity of detection times; and sends the single-ended detection packet based on the session parameter. A quantity of transmission times of the single-ended detection packet is limited by setting the session parameter, to avoid frequent transmission of the single-ended detection packet and effectively control network load.

According to a second aspect, a device detection apparatus is provided, where the apparatus is used in a first device, and the apparatus includes: an obtaining module, configured to obtain, through a DHCP, a first address of a second device and a second address allocated by the second device to the first device, where the second address is an IP address allocated by the second device to the first device, and the second device is used as a DHCP server; a sending module, configured to: create a single-ended detection session based on the first address and the second address; and send a single-ended detection packet to the second device based on establishment of the single-ended detection session, where a source address and a destination address of the single-ended detection packet are the second address; and a detection module, configured to detect a running status of the second device based on a transmission status of the single-ended detection packet.

In a possible implementation, the obtaining module is configured to: receive a DHCP offer packet sent by the second device, where the DHCP offer packet includes the first address of the second device; and extract the first address of the second device from the DHCP offer packet.

In a possible implementation, the sending module is further configured to return a request packet to the second device based on the DHCP offer packet sent by the second device, where the DHCP offer packet indicates, to the first device, the second address that can be allocated by the second device, and the request packet indicates that the first device selects the second address allocated by the second device; and the obtaining module is further configured to: receive an acknowledgment packet returned by the second device based on the request packet, where the acknowledgment packet indicates duration for using the second address by the first device; verify the second address based on the acknowledgment packet; and perform, based on that a verification result of the second address indicates that the first device is allowed to use the second address, an operation of creating the single-ended detection session.

In a possible implementation, the detection module is configured to determine, based on that the single-ended detection packet returned by the second device is received in a first time period, that the running status of the second device is normal; or determine, based on that the single-ended detection packet returned by the second device is not received in a first time period, that the running status of the second device is abnormal.

In a possible implementation, the apparatus further includes: a setting module, configured to set the second address as an invalid address based on that the running status of the second device is abnormal.

In a possible implementation, the sending module is further configured to send a single-ended detection packet to the second device again based on that the running status of the second device is abnormal; and the detection module is further configured to determine the running status of the second device based on a transmission status of the single-ended detection packet.

In a possible implementation, the sending module is further configured to apply to the second device for a third address based on that the running status of the second device is normal and the second address is the invalid address.

In a possible implementation, the first address is a medium access control MAC address.

In a possible implementation, the single-ended detection packet is a single-ended BFD packet or a single-ended NQA packet.

In a possible implementation, the DHCP is a DHCPv6.

In a possible implementation, the second device is further used as a gateway.

In a possible implementation, the second device is one of a plurality of gateways, and a VRRP is deployed between the plurality of gateways.

In a possible implementation, the sending module is configured to: configure a session parameter of the single-ended detection session, where the session parameter includes a detection periodicity and a quantity of detection times; and send the single-ended detection packet based on the session parameter.

According to a third aspect, a computer device is provided, where the device includes a processor, and the processor is configured to load and execute at least one instruction, to enable the computer device to implement the device detection method according to any one of the first aspect or the possible implementations of the first aspect.

In a possible implementation, the device further includes a memory, the memory is coupled to the processor, and the memory stores the at least one instruction.

According to a fourth aspect, a computer-readable storage medium is provided. The computer-readable storage medium stores at least one instruction, and the instruction is loaded and executed by a processor to implement the device detection method according to any one of the first aspect or the possible implementations of the first aspect.

According to a fifth aspect, a computer program (product) is provided. The computer program (product) includes a computer program/instructions, and the computer program/instructions are executed by a processor, to enable a computer to implement the device detection method according to any one of the first aspect or the possible implementations of the first aspect.

According to a sixth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform the method according to any one of the first aspect or the possible implementations of the first aspect.

Optionally, there are one or more processors, and there are one or more memories.

Optionally, the memory may be integrated with the processor, or the memory is separately from the processor.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a seventh aspect, a chip is provided. The chip includes a processor, configured to invoke, from a memory, program instructions or code stored in the memory and run the program instructions or code, to enable a communication device in which the chip is mounted to perform the method in the foregoing aspects.

According to an eighth aspect, another chip is provided, including an input interface, an output interface, a processor, and a memory. The input interface, the output interface, the processor, and the memory are connected to each other through an internal connection path. The processor is configured to execute code in the memory. When the code is executed, the processor is configured to perform the method in the foregoing aspects.

It should be understood that, for beneficial effects achieved by the technical solutions of the second aspect to the eighth aspect of this application and corresponding possible implementations, refer to the technical effects of the first aspect and corresponding possible implementations of the first aspect. Details are not described herein again.

### BRIEF DESCRIPTION OF DRAWINGS

FIG. 1 is a diagram of an implementation environment according to an embodiment of this application;
FIG. 2 is a diagram of another implementation environment according to an embodiment of this application;
FIG. 3 is a flowchart of a device detection method according to an embodiment of this application;
FIG. 4 is a diagram of a structure of a device detection apparatus according to an embodiment of this application;
FIG. 5 is a diagram of a structure of a network device according to an embodiment of this application; and
FIG. 6 is a diagram of a structure of another network device according to an embodiment of this application.

### DESCRIPTION OF EMBODIMENTS

Terms used in implementations of this application are only used to explain specific embodiments of this application, but are not intended to limit this application. To make the objectives, technical solutions, and advantages of this application clearer, the following further describes the implementations of this application in detail with reference to the accompanying drawings.

In the field of communication technologies, a first device provides a local service for a user through data communication with another device, and data communication of the first device is implemented based on an IP address of the first device. The IP address of the first device may be an address selected by a second device from an address pool and allocated by the second device to the first device. When customer premise equipment (customer premise equipment, CPE) used as the first device is deployed in a software-defined wide area network (software-defined wide area network, SDWAN), the second device allocates the IP address to the first device through a DHCP. For a case in which the second device needs to be used to allocate the IP address to the first device, because a running status of the second device affects usage of the IP address allocated by the second device, embodiments of this application provide a device detection method, to detect the running status of the second device.

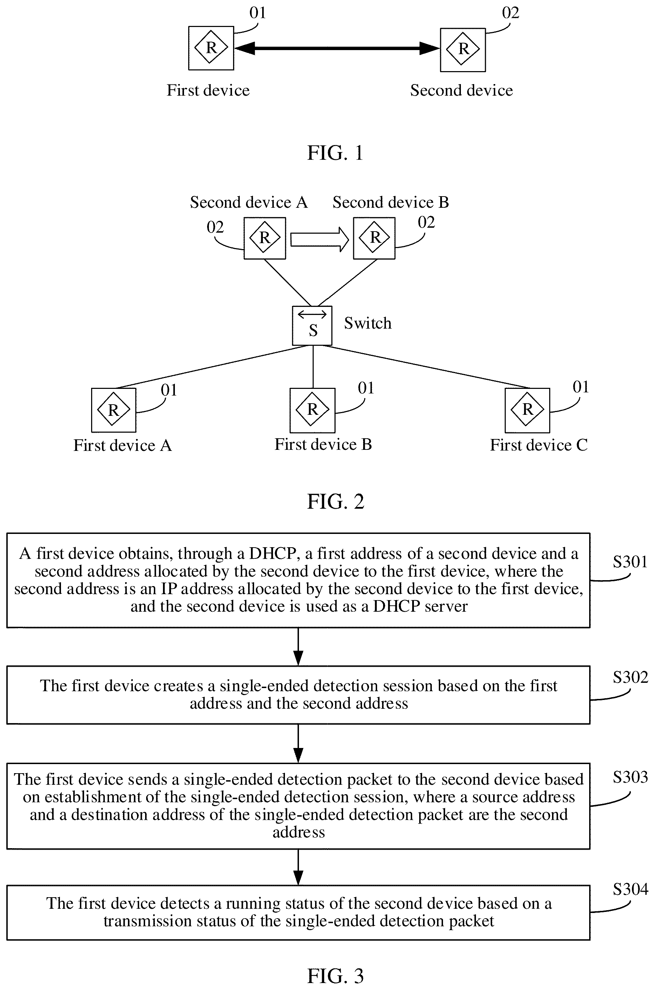

FIG. 1 is a diagram of an implementation environment of a device detection method according to an embodiment of this application. The implementation environment includes a first device 01 and a second device 02. The first device 01 may be communicatively connected to the second device 02 in a wired or wireless network manner. Based on the communication connection, the first device 01 may send a single-ended detection packet to the second device 02, to detect a running status of the second device 02 based on a transmission status of the single-ended detection packet.

A connection manner between the first device 01 and the second device 02 is not limited in this embodiment of this application. The first device 01 may be directly connected to the second device 02, or may be indirectly connected to the second device 02 through another device. In addition, a quantity relationship between the first device 01 and the second device 02 may be that one first device 01 is connected to one second device 02 shown in FIG. 1, or may be another quantity relationship. In addition, a quantity of first devices 01 may be the same as or different from a quantity of second devices 02.

FIG. 2 is a diagram of another implementation environment of a device detection method according to an embodiment of this application. Refer to FIG. 2, three first devices 01 are indirectly connected to two second devices 02 through a switch. The three first devices 01 are a first device A, a first device B, and a first device C, and the two second devices 02 are a second device A and a second device B. The second device A belongs to a master server (master server), and the second device B belongs to a slave server (slave server). The master server and the slave server are disposed to improve reliability of a network device on a serving end. For example, S in FIG. 2 indicates the switch (switch), and a network device connecting the first device 01 and the second device 02 may be the switch shown in FIG. 2, or may be another network device with a routing function, or may be a layer 2 network used for transmission. The layer 2 network is, for example, a multi-service transport platform (multi-service transport platform, MSTP).

R in FIG. 1 and FIG. 2 indicates a router (router). Optionally, the first device 01 and the second device 02 may be routers, or may be network devices other than the router. The first device 01 may be any network device that supports a client (client) service, and the second device 02 may be any network device that supports a server (server) service. The first device 01 or the second device 02 may be a server, for example, a central server, an edge server, or a local server in a local data center. The server may be a physical server, or may be a cloud server that provides a cloud computing service in a cloud scenario. In some embodiments, the first device 01 or the second device 02 may alternatively be a terminal device such as a desktop computer, a notebook computer, or a smartphone. Alternatively, the first device 01 or the second device 02 may be a broadband network gateway (broadband network gateway, BNG), a gateway (gateway, GW), a virtual broadband network gateway (virtual broadband network gateway, vBNG), an access router (access router, AR), or the like.

FIG. 3 is a flowchart of a device detection method according to an embodiment of this application, and the method includes S301 to S304.

S301: A first device obtains, through a DHCP, a first address of a second device and a second address allocated by the second device to the first device, where the second address is an IP address allocated by the second device to the first device, and the second device is used as a DHCP server.

In a possible case, the first device interacts with the second device based on a data communication requirement to obtain the second address allocated by the second device. During the interaction, the first device may obtain the first address of the second device. An example in which the second device allocates the second address to the first device through the DHCP is used to describe an interaction process between the first device and the second device.

The first device broadcasts a discover (discover) packet externally. The discover packet is used to request a service device that receives the discover packet to allocate an address to the first device. The service device refers to a network device that can provide a server service, and may be referred to as a DHCP server in some cases. Optionally, the DHCP is a dynamic host configuration protocol for internet protocol version 6 (dynamic host configuration protocol for internet protocol version 6, DHCPv6). Because the first device sends the discover packet through broadcast, and does not specify a network device that receives the discover packet, in some cases, all network devices that support a transmission control protocol/internet protocol (transmission control protocol/internet protocol, TCP/IP) in a network receive the discover packet, but a network device that can respond to the discover packet is the service device.

Optionally, after receiving the discover packet, each of at least one service device in the network selects an address from an unallocated address pool as an available address that can be allocated to the first device, and sends a DHCP offer (offer) packet including the available address to the first device. After receiving at least one DHCP offer packet, the first device may select a first received DHCP offer packet from the at least one DHCP offer packet, or may randomly select one DHCP offer packet from the at least one DHCP offer packet. This is not limited in this embodiment of this application. No matter which manner is used to select the DHCP offer packet, an available address that can be provided by the service device can be determined based on the selected DHCP offer packet. A service device corresponding to the selected DHCP offer packet is the second device, and an available address included in the selected DHCP offer packet is the second address allocated by the second device.

It can be learned from the foregoing example that the first device receives the DHCP offer packet sent by the second device, and the DHCP offer packet indicates, to the first device, the second address that can be allocated by the second device. In addition, the DHCP offer packet further includes device information of the second device, so that the first device determines, based on the device information in the DHCP offer packet, which service device is the second device that can provide the second address.

In a possible case, the device information includes the first address of the second device, and the first address indicates a network location of the second device. The network location includes a network physical location or a network logical location. When the first address indicates the network physical location of the second device, the first address is, for example, a MAC address. When the first address indicates the network logical location of the second device, the first address is, for example, an IP address. The first address may alternatively be another address that can indicate the network location of the second device. In addition, the first address may be an entity address in the foregoing example, or may be a virtual address. For a case in which embodiments of this application are applied to a virtual router redundancy protocol (virtual router redundancy protocol, VRRP) scenario, for example, as shown in FIG. 2, there are a plurality of second devices, and the plurality of second devices may be used as gateways. A VRRP protocol is deployed between the plurality of gateways, for example, the VRRP protocol is deployed between two gateways. Because the first device and the second device in the VRRP scenario are virtual devices, the first address of the second device is a virtual address, for example, a virtual MAC address and a virtual IP address. Based on the information included in the DHCP offer packet, the first device may extract the first address of the second device from the DHCP offer packet. For example, the device information is extracted from the DHCP offer packet, and the first address of the second device is extracted based on the device information.

For example, after extracting the first address from the DHCP offer packet, the first device continues to interact with the second device based on the first address, to complete the allocation of the second address. The interaction process includes: returning a request (request) packet to the second device based on the DHCP offer packet sent by the second device, where the request packet indicates that the first device selects the second address allocated by the second device; receiving an acknowledgment (ack) packet returned by the second device based on the request packet, where the ack packet indicates duration for using the second address by the first device; verifying the second address based on the ack packet; and determining, based on that a verification result of the second address indicates that the first device is allowed to use the second address, to complete the allocation of the second address to the first device.

The request packet includes the second address, and the second address indicates a network location of the first device. For example, the network location includes a network logical location. The second address may be an IP address or a virtual IP address, and the IP address may be a complete IP address or a prefix address. The second address in the request packet is used to describe an address that is selected by the first device for data communication. In a possible implementation, the first device returns, in a broadcast manner, the request packet to each of the at least one service device that sends the DHCP offer packet, to notify each of the at least one service device that the first device selects the second address allocated by the second device to the service device. In this case, another service device other than the second device determines, based on the received request packet, that the first device declines an available address allocated by the another service device, and stops interaction with the first device. Optionally, in addition to the second address, the request packet may also include the device information of the second device. The device information of the second device indicates that a network device selected by the first device for interaction is the second device.

In a possible case, after receiving the request packet, the second device determines, based on that a second address carried in the request packet is the same as the second address allocated by the second device, that the first device selects the second address allocated by the second device, and continues to send the ack packet to the first device, to perform interaction in an acknowledgment phase. For example, the second device adds a use duration option of the second address to the request packet, to obtain an ack packet that can indicate duration for using the second address by the first device, and returns the ack packet to the first device.

After receiving the ack packet, the first device verifies whether the second address allocated by the second device is allowed to be used. An example in which a network in which the first device is located is an Ethernet is used to describe a process in which the first device verifies the second address. The first device sends an address resolution protocol (address resolution protocol, ARP) request based on the second address, to verify whether the second address is occupied by another network device supporting a client service. Based on that the verification result indicates that the second address is restricted in use, the first device sends a decline (decline) packet to the second device to notify the second device that the second address is restricted in use, to avoid a communication conflict between different network devices supporting a client service caused because the second device continues to allocate the second address to another network device supporting a client service; and repeats a process of requesting address allocation in S301. Based on that the verification result indicates that the first device is allowed to use the second address, the first device determines that the second address has been successfully obtained, starts a lease based on the use duration option carried in the ack packet, and starts to use the second address to perform data communication.

S302: The first device creates a single-ended detection session based on the first address and the second address.

In a possible implementation, after determining the second address, in addition to performing the data communication based on the second address, the first device further creates the single-ended detection session based on the first address and the second address, to detect a running status of the second device. The single-ended detection session may be at least one of a bidirectional forwarding detection (bidirectional forwarding detection, BFD) session or a network quality analysis (network quality analysis, NQA) session. The first device may send a single-ended detection packet to the second device based on establishment of the single-ended detection session. When the created single-ended detection session is the BFD session, the single-ended detection packet is a single-ended BFD packet. When the created single-ended detection session is the NQA session, the single-ended detection packet is a single-ended NQA packet. In a possible case, in a process of creating the single-ended detection session, the first device flexibly configures a session parameter based on experience and a network status. The session parameter includes but is not limited to a detection periodicity and a quantity of detection times.

S303: The first device sends the single-ended detection packet to the second device based on the establishment of the single-ended detection session, where a source address and a destination address of the single-ended detection packet are the second address.

Regardless of the single-ended detection session established by the first device, the first device may send the single-ended detection packet based on the established single-ended detection session. For example, after completing negotiation based on the configured session parameter, the first device and the second device send the single-ended detection packet based on the session parameter. Optionally, the source address and the destination address of the single-ended detection packet sent by the first device are the second address, to be specific, the single-ended detection packet is sent by the first device, and is further transmitted back to the first device in a transmission process, to perform loopback transmission. The single-ended detection packet further includes the first address, to specify that a transmission path of the single-ended detection packet needs to pass through the second device. The following uses a topology structure shown in FIG. 2 as an example to describe the transmission process of the single-ended detection packet.

The first device sends the single-ended detection packet to the switch. The switch sends the single-ended detection packet to the second device based on that the first address is encapsulated in the single-ended detection packet. The second device parses the received single-ended detection packet. Because the destination address of the single-ended detection packet is the second address, the received single-ended detection packet is sent to the switch. The switch then sends the single-ended detection packet to the first device based on that the destination address of the single-ended detection packet is the second address, to implement the loopback transmission of the single-ended detection packet. In addition, a difference between different single-ended detection sessions lies in a structure of a transmitted single-ended detection packet. However, regardless of whether the transmitted single-ended detection packet is a BFD packet, an NQA packet, or another single-ended detection packet, a source address and a destination address of the single-ended detection packet are both the second address.

S304: The first device detects the running status of the second device based on a transmission status of the single-ended detection packet.

For example, a process in which the first device detects the running status of the second device based on the transmission status of the single-ended detection packet includes: determining, based on that the single-ended detection packet returned by the second device is received in a first time period, that the running status of the second device is normal; or determining, based on that the single-ended detection packet returned by the second device is not received in a first time period, that the running status of the second device is abnormal.

Optionally, the first time period may be a time length that is set based on experience and that has any time unit and value. For example, the first time period is set to one second based on experience and a network topology between the first device and the second device. When the running status of the second device is normal, the second device has a routing and forwarding capability, the second device can normally send the received single-ended detection packet to the first device, and the first device can receive the single-ended detection packet within one second. When the running status of the second device is abnormal, a fault occurs on a routing and forwarding capability of the second device, for example, packet forwarding cannot be performed, or packet parsing is abnormal, and the first device cannot receive the single-ended detection packet within one second. The packet parsing being abnormal is, for example, that the second device reads the destination address of the detection packet as another address other than the second address, or parsing duration is longer than a millisecond level.

The first device determines the running status of the second device based on the transmission status of the single-ended detection packet. When the running status of the second device is normal, the first device continues to detect the second device through the single-ended detection packet. When the running status of the second device is abnormal, the first device sets the second device as an invalid address, to stop using the second address to perform data communication, thereby avoiding a data loss. In some possible cases, after determining the second address used for data communication, the first device sends the second address to a downstream network device, so that the downstream network device sends, to the first device based on the second address, data that needs to be transmitted, and the first device transmits the received network data externally. For the foregoing case in which the first device sends the second address to the downstream network device, when the second address is the invalid address, the first device stops an operation of sending the second address to the downstream network device.

For a case in which the second device is the second device A in the network topology diagram shown in FIG. 2, because the second device A belongs to the master server in the master server and slave server, when the second device A is faulty, the slave server of the second device A bears a service of the second device A, and performs a service such as allocation of an available address.

For example, when the second device runs abnormally, the first device still continues to detect the running status of the second device. For example, the first device sends a single-ended detection packet to the second device again, and determines the running status of the second device based on a transmission status of the single-ended detection packet. The first device applies to the second device for a third address based on that the running status of the second device is normal and the second address is the invalid address, where the third address indicates a network address of the first device.

Because the second device once runs abnormally, restarting the second device or deploying a new second device may cause a change of an address pool of the second device. The second device may allocate the second address that has been allocated to the first device to another network device supporting a client service. As a result, a conflict occurs on the second address used by the first device, and data transmitted by the first device is lost. Therefore, when the second device runs normally, compared with reusing the second address, the first device preferentially reapplies for a third address, to perform data communication based on the third address, thereby avoiding a data loss caused by an address conflict, and ensuring data communication quality of the first device.

Optionally, a process in which the first device applies to the second device for the third address is similar to a process of applying for the second address in S301. A difference lies in that the first device may send the discover packet to the second device in a unicast or broadcast manner. For specific descriptions, refer to related descriptions of applying for the second address in S301. Details are not described herein again. The first device detects the second device by continuously sending the single-ended detection packet, and applies for a new address in time when the second device is restored to normal, without a need of waiting for a lease of the second address to expire or renewing (renew) a periodicity. Therefore, address allocation efficiency is high, and data communication quality of the first device is high.

This embodiment of this application is intended to describe, by using an example, that when the second address for the first device is determined, the first device automatically triggers device detection on the second device, but does not limit an application scenario of the device detection method. In some cases, the single-ended detection session used to forward the single-ended detection packet may alternatively be another single-ended detection session other than the BFD and the NQA, or a bidirectional detection session. In addition to being applied to the implementation environment shown in FIG. 1 or FIG. 2, the device detection method provided in this embodiment of this application may be further applied to another redundant networking structure of a client detection self-healing mechanism+server. The redundant networking structure is, for example, VRRP networking.

In conclusion, according to the device detection method provided in this embodiment of this application, when the second device completes the allocation of the first address, the first device automatically triggers the sending of the single-ended detection packet, to perform device detection, and no manual configuration is required, thereby achieving high deployability and usability. In addition, both the source address and the destination address of the single-ended detection packet are the second address. The second device is only used for packet forwarding, and only needs to have a routing and forwarding capability. Therefore, a requirement on the second device is low, and universality is high. The created single-ended detection session has no dependency on configuration of the second device, and has good deployability and high interoperability and protocol interoperability. During allocation of the second address to the first device, the first address and the second address that are required for creating the single-ended detection session can be obtained. A process of obtaining the first address and the second address is simple, efficient, and low-cost.

Compared with a conventional technology in which the first device can request a new third address only after a lease of the second address expires, or when a periodicity is renewed, the first device can reply, based on a new periodicity when a network location of the second device does not change, a negative acknowledgment (negative acknowledgment, NAK) packet to reapply for the third address, according to the device detection method provided in this application, it can be detected in time that the running status of the second device is restored to normal, to apply for the third address, so that the first device restores data communication within a second level, thereby reducing impact of a fault of the second device on data communication of the first device, and improving reliability and self-healing of the data communication of the first device.

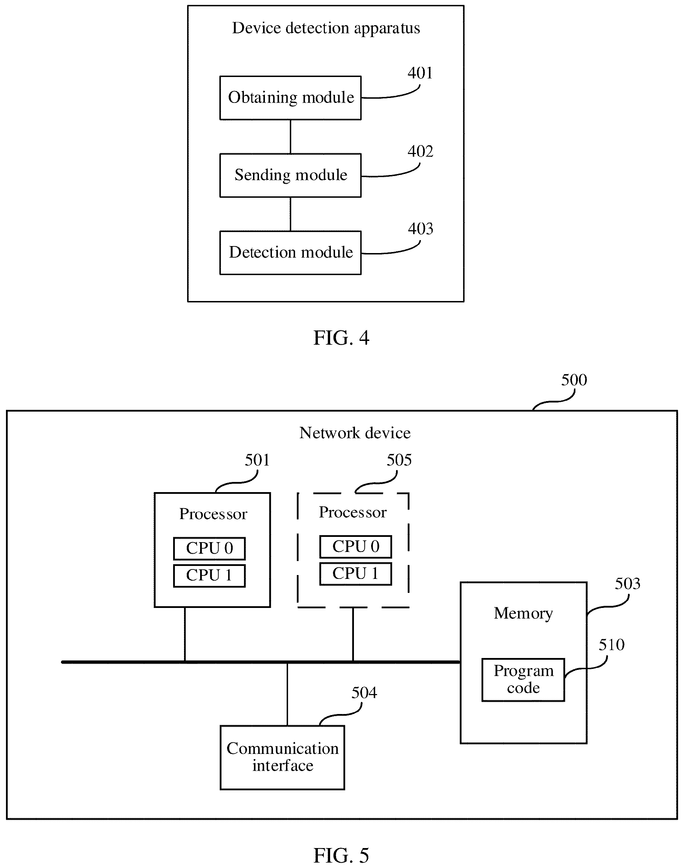

The foregoing describes the device detection method in this embodiment of this application. Corresponding to the foregoing method, an embodiment of this application further provides a device detection apparatus. FIG. 4 is a diagram of a structure of a device detection apparatus according to an embodiment of this application. Based on the following modules shown in FIG. 4, the device detection apparatus shown in FIG. 4 can perform all or some of the operations shown in FIG. 3. It should be understood that the apparatus may include more additional modules than the shown modules, or some of the shown modules are omitted. This is not limited in this embodiment of this application. As shown in FIG. 4, the apparatus includes:
an obtaining module 401, configured to obtain, through a DHCP, a first address of a second device and a second address allocated by the second device to the first device, where the second address is an IP address allocated by the second device to the first device, and the second device is used as a DHCP server;
a sending module 402 is configured to: create a single-ended detection session based on the first address and the second address; and send a single-ended detection packet to the second device based on establishment of the single-ended detection session, where a source address and a destination address of the single-ended detection packet are the second address; and
a detection module 403 is configured to detect a running status of the second device based on a transmission status of the single-ended detection packet.

In a possible implementation, the obtaining module 401 is configured to: receive a DHCP offer packet sent by the second device, where the DHCP offer packet includes the first address of the second device; and extract the first address of the second device from the DHCP offer packet.

In a possible implementation, the sending module 402 is further configured to return a request packet to the second device based on the DHCP offer packet sent by the second device, where the DHCP offer packet indicates, to the first device, the second address that can be allocated by the second device, and the request packet indicates that the first device selects the second address allocated by the second device; and the obtaining module 401 is further configured to: receive an acknowledgment packet returned by the second device based on the request packet, where the acknowledgment packet indicates duration for using the second address by the first device; verify the second address based on the acknowledgment packet; and perform, based on that a verification result of the second address indicates that the first device is allowed to use the second address, an operation of creating the single-ended detection session.

In a possible implementation, the detection module 403 is configured to determine, based on that the single-ended detection packet returned by the second device is received in a first time period, that the running status of the second device is normal; or determine, based on that the single-ended detection packet returned by the second device is not received in a first time period, that the running status of the second device is abnormal.

In a possible implementation, the apparatus further includes: a setting module, configured to set the second address as an invalid address based on that the running status of the second device is abnormal.

In a possible implementation, the sending module 402 is further configured to send a single-ended detection packet to the second device again based on that the running status of the second device is abnormal; and the detection module 403 is further configured to determine the running status of the second device based on a transmission status of the single-ended detection packet.

In a possible implementation, the sending module 402 is further configured to apply to the second device for a third address based on that the running status of the second device is normal and the second address is the invalid address.

In a possible implementation, the first address is a medium access control MAC address.

In a possible implementation, the single-ended detection packet is a single-ended BFD packet or a single-ended NQA packet.

In a possible implementation, the DHCP is a DHCPv6.

In a possible implementation, the second device is further used as a gateway.

In a possible implementation, the second device is one of a plurality of gateways, and a VRRP is deployed between the plurality of gateways.

In a possible implementation, the sending module 402 is configured to: configure a session parameter of the single-ended detection session, where the session parameter includes a detection periodicity and a quantity of detection times; and send the single-ended detection packet based on the session parameter.

In the foregoing apparatus, when the second device completes the allocation of the first address, the first device automatically triggers the sending of the single-ended detection packet, to perform device detection, and no manual configuration is required, thereby achieving high deployability. In addition, both the source address and the destination address of the single-ended detection packet are the second address. The second device is only used for packet forwarding, and only needs to have a routing and forwarding capability. Therefore, a device requirement on the second device is low, and universality is high.

It should be understood that, when the apparatus provided in FIG. 4 implements functions of the apparatus, division into the foregoing function modules is merely used as an example for description. During actual application, the foregoing functions may be allocated to different function modules for implementation based on a requirement. In other words, a device is divided into different function modules in terms of an inner structure, to implement all or some of the functions described above. In addition, the apparatus provided in the foregoing embodiment and the method embodiment belong to the same concept. For specific implementation processes thereof, refer to the method embodiment. Details are not described herein again.

FIG. 5 is a diagram of a structure of a network device 500 according to an example embodiment of this application. The network device 500 shown in FIG. 5 is configured to perform operations in the device detection method shown in FIG. 3. The network device 500 is, for example, a switch or a router. The network device 500 may be implemented by a general bus architecture.

As shown in FIG. 5, the network device 500 includes at least one processor 501, a memory 503, and at least one communication interface 504.

The processor 501 is, for example, a general-purpose central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 501 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable logic gate array (field-programmable gate array, FPGA), a generic array logic (generic array logic, GAL), or any combination thereof. The processor may implement or execute various logical blocks, modules, and circuits described with reference to the content disclosed in embodiments of this application. Alternatively, the processor may be a combination of processors implementing a computing function, for example, a combination including one or more microprocessors, or a combination of a DSP and a microprocessor.

Optionally, the network device 500 further includes a bus. The bus is configured to transmit information between components of the network device 500. The bus may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, only one bold line is used for representation in FIG. 5, but this does not indicate that there is only one bus or only one type of bus.

The memory 503 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only memory, EEPROM), a compact disc read-only memory (compact disc read-only memory, CD-ROM) or another optical disk storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. For example, the memory 503 exists independently, and is connected to the processor 501 through the bus. Alternatively, the memory 503 may be integrated with the processor 501.

The communication interface 504 uses any apparatus such as a transceiver, and is configured to communicate with another device or communication network. The communication network may be an Ethernet, a radio access network (RAN), a wireless local area network (wireless local area network, WLAN), or the like. The communication interface 504 may include a wired communication interface, and may further include a wireless communication interface. Specifically, the communication interface 504 may be an Ethernet (Ethernet) interface, a fast Ethernet (fast Ethernet, FE) interface, a gigabit Ethernet (gigabit Ethernet, GE) interface, an asynchronous transfer mode (asynchronous transfer mode, ATM) interface, a wireless local area network (wireless local area network, WLAN) interface, a cellular network communication interface, or a combination thereof. The Ethernet interface may be an optical interface, an electrical interface, or a combination thereof. In embodiments of this application, the communication interface 504 may be used by the network device 500 to communicate with another device.

During specific implementation, in an embodiment, the processor 501 may include one or more CPUs, for example, a CPU 0 and a CPU 1 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network device 500 may include a plurality of processors, for example, the processor 501 and a processor 505 shown in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network device 500 may further include an output device and an input device. The output device communicates with the processor 501, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 501, and may receive a user input in a plurality of manners. For example, the input device may be a mouse, a keyboard, a touchscreen device, or a sensor device.

In some embodiments, the memory 503 is configured to store program code 510 for executing the solutions of this application, and the processor 501 may execute the program code 510 stored in the memory 503. In other words, the network device 500 may implement, through the processor 501 and the program code 510 in the memory 503, the device detection method provided in the method embodiment. The program code 510 may include one or more software modules. Optionally, the processor 501 may also store the program code or instructions for executing the solutions of this application.

In a specific embodiment, the network device 500 in this embodiment of this application may correspond to the computer device in the foregoing method embodiment.

The steps of the device detection method shown in FIG. 3 are implemented through an integrated logic circuit of hardware in the processor of the network device 500, or by using instructions in the form of software. The steps of the method disclosed with reference to embodiments of this application may be directly performed by a hardware processor, or may be performed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory, and completes the steps of the foregoing methods in combination with hardware of the processor. To avoid repetition, details are not described herein again.

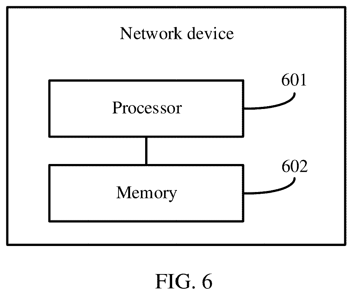

FIG. 6 is a diagram of a structure of another network device according to an embodiment of this application. The network device is, for example, a server. The server may differ greatly due to different configurations or performance, and may include one or more processors 601 and one or more memories 602. The one or more memories 602 store at least one computer program, and the at least one computer program is loaded and executed by the one or more processors 601, so that the server implements the device detection method provided in the method embodiment. The processor 601 is, for example, a central processing unit (central processing unit, CPU). Certainly, the network device may further have components such as a wired or wireless network interface, a keyboard, and an input/output interface, to perform input/output. The network device may further include another component configured to implement a function of the device. Details are not described herein.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform the device detection method.

It should be understood that the processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computer machine (advanced RISC machine, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. By way of illustrative rather than limitative descriptions, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, to enable a computer to implement the foregoing device detection method.

An embodiment of this application further provides a computer program (product). When the computer program is executed by a computer, a processor or the computer is enabled to perform corresponding steps and/or procedures in the foregoing method embodiment.

An embodiment of this application further provides a chip. The chip includes a processor, configured to invoke, from a memory, instructions stored in the memory and run the instructions, to enable a communication device in which the chip is installed to perform the foregoing device detection method.

An embodiment of this application further provides another chip, including an input interface, an output interface, a processor, and a memory. The input interface, the output interface, the processor, and the memory are connected to each other through an internal connection path. The processor is configured to execute code in the memory. When the code is executed, the processor is configured to perform the foregoing device detection method.

All or some of the foregoing embodiments may be implemented by using software, hardware, firmware, or any combination thereof. When software is used to implement embodiments, all or some of embodiments may be implemented in the form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive Solid-State Drive), or the like.

It should be noted that, information (including but not limited to user equipment information, personal information of a user, and the like), data (including but not limited to data used for analysis, stored data, displayed data, and the like), and signals involved in this application are all authorized by the user or fully authorized by all parties, and collection, use, and processing of relevant data need to comply with relevant laws, regulations, and standards of relevant countries and regions. For example, the first address and the like in this application are all obtained under full authorization.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

When software is used to implement embodiments, all or some of embodiments may be implemented in the form of a computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Usually, the program module includes a routine, a program, a library, an object, a class, a component, a data structure, and the like, and executes a specific task or implements a specific abstract data structure. In various embodiments, functions of the program module may be combined or split between the described program modules. The machine-executable instructions for the program module may be executed locally or within a distributed device. In the distributed device, the program module may be located in both a local storage medium and a remote storage medium.

Computer program code for implementing the method in embodiments of this application may be written in one or more programming languages. The computer program code may be provided for a processor of a general-purpose computer, a dedicated computer, or another programmable device detection apparatus, so that when the program code is executed by the computer or the another programmable device detection apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or another form of propagated signal, such as a carrier wave and an infrared signal.

A machine-readable medium may be any tangible medium that includes or stores programs for or with respect to an instruction execution system, apparatus, or a device. The machine-readable medium may be a machine-readable signal medium or a machine-readable storage medium. The machine-readable medium may include but is not limited to an electronic, magnetic, optical, electromagnetic, infrared, or a semiconductor system, apparatus, or a device, or any appropriate combination thereof. A more detailed example of the machine-readable storage medium includes an electrical connection with one or more wires, a portable computer disk, a hard disk drive, a random access memory (RAM), a read-only memory (ROM), an erasable programmable read-only memory (EPROM or a flash memory), an optical storage device, a magnetic storage device, or any appropriate combination thereof.

It may be clearly understood by a person skilled in the art that, for the purpose of convenient and brief description, for a detailed working process of the foregoing system, device, and module, refer to a corresponding process in the foregoing method embodiment. Details are not described herein again.

In the several embodiments provided in this application, it should be understood that the disclosed system, device, and method may be implemented in another manner. For example, the described device embodiment is merely an example. For example, division of modules is merely division of logical functions and there may be another division manner during actual implementation. For example, a plurality of modules or components may be combined or may be integrated to another system, or some features may be ignored or not executed. In addition, the displayed or discussed mutual couplings or direct couplings or communication connections may be implemented through some interfaces, indirect couplings or communication connections between devices or modules, or electrical connections, mechanical connections, or connections in other forms.

The modules described as separate components may or may not be physically separate, and parts displayed as modules may or may not be physical modules, to be specific, may be located at one position, or may be distributed on a plurality of network modules. Some or all of the modules may be selected based on an actual requirement to implement the objectives of the solutions of embodiments of this application.

In addition, function modules in embodiments of this application may be integrated into one processing module, or each of the modules may exist alone physically, or two or more modules may be integrated into one module. The integrated module may be implemented in the form of hardware, or may be implemented in the form of a software function module.

If the integrated module is implemented in the form of a software function module and sold or used as an independent product, the integrated module may be stored in a computer-readable storage medium. Based on such an understanding, the technical solutions of this application essentially, or a part contributing to a conventional technology, or all or some of the technical solutions may be implemented in the form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of the various examples, a first image may be referred to as a second image, and similarly, the second image may be referred to as the first image. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" in this application means two or more. For example, a plurality of second packets means two or more second packets. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any combination and all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or components thereof not excluded.

It should be further understood that the terms "if" and "if" may be interpreted as "when" ("when" or "upon") or "in response to determining", or "in response to detecting". Similarly, based on the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, and B may alternatively be determined based on A and/or another information.

It should be further understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments in any appropriate manner.

## Claims

1. A device detection method, wherein the method comprises:
obtaining, by a first device through a dynamic host configuration protocol DHCP, a first address of a second device and a second address allocated by the second device to the first device, wherein the second address is an internet protocol IP address allocated by the second device to the first device, and the second device is used as a dynamic host configuration protocol server DHCP server;
creating, by the first device, a single-ended detection session based on the first address and the second address;
sending, by the first device, a single-ended detection packet to the second device based on establishment of the single-ended detection session, wherein a source address and a destination address of the single-ended detection packet are the second address; and
detecting, by the first device, a running status of the second device based on a transmission status of the single-ended detection packet.

2. The method according to claim 1, wherein the obtaining a first address of a second device comprises:
receiving a dynamic host configuration protocol offer DHCP offer packet sent by the second device, wherein the DHCP offer packet comprises the first address of the second device; and
extracting the first address of the second device from the DHCP offer packet.

3. The method according to claim 1 or 2, wherein before the creating, by the first device, a single-ended detection session based on the first address and the second address, the method further comprises:
returning a request packet to the second device based on the DHCP offer packet sent by the second device, wherein the DHCP offer packet indicates, to the first device, the second address that can be allocated by the second device, and the request packet indicates that the first device selects the second address allocated by the second device;
receiving an acknowledgment packet returned by the second device based on the request packet, wherein the acknowledgment packet indicates duration for using the second address by the first device;
verifying the second address based on the acknowledgment packet; and
performing, based on that a verification result of the second address indicates that the first device is allowed to use the second address, an operation of creating the single-ended detection session.

4. The method according to any one of claims 1 to 3, wherein the detecting a running status of the second device based on a transmission status of the single-ended detection packet comprises:
determining, based on that the single-ended detection packet returned by the second device is received in a first time period, that the running status of the second device is normal; or
determining, based on that the single-ended detection packet returned by the second device is not received in the first time period, that the running status of the second device is abnormal.

5. The method according to any one of claims 1 to 4, wherein after the detecting a running status of the second device based on a transmission status of the single-ended detection packet, the method further comprises:
setting the second address as an invalid address based on that the running status of the second device is abnormal.

6. The method according to any one of claims 1 to 5, wherein after the detecting a running status of the second device based on a transmission status of the single-ended detection packet, the method further comprises:
sending a single-ended detection packet to the second device again based on that the running status of the second device is abnormal; and
determining the running status of the second device based on a transmission status of the single-ended detection packet.

7. The method according to claim 6, wherein after the determining the running status of the second device based on the transmission status of the single-ended detection packet, the method further comprises:
applying to the second device for a third address based on that the running status of the second device is normal and the second address is the invalid address.

8. The method according to any one of claims 1 to 7, wherein the first address is a medium access control MAC address.

9. The method according to any one of claims 1 to 8, wherein the single-ended detection packet is a single-ended bidirectional forwarding detection BFD packet or a single-ended network quality analysis NQA packet.

10. The method according to any one of claims 1 to 9, wherein the DHCP is a dynamic host configuration protocol for internet protocol version 6 DHCPv6.

11. The method according to any one of claims 1 to 10, wherein the second device is further used as a gateway.

12. The method according to claim 11, wherein the second device is one of a plurality of gateways, and a virtual router redundancy protocol VRRP is deployed between the plurality of gateways.

13. The method according to any one of claims 1 to 12, wherein the sending, by the first device, a single-ended detection packet to the second device based on establishment of the single-ended detection session comprises:
configuring, by the first device, a session parameter of the single-ended detection session, wherein the session parameter comprises a detection periodicity and a quantity of detection times; and
sending the single-ended detection packet based on the session parameter.

14. A device detection apparatus, wherein the apparatus is used in a first device, and the apparatus comprises:
an obtaining module, configured to obtain, through a dynamic host configuration protocol DHCP, a first address of a second device and a second address allocated by the second device to the first device, wherein the second address is an internet protocol IP address allocated by the second device to the first device, and the second device is used as a dynamic host configuration protocol server DHCP server;
a sending module, configured to: create a single-ended detection session based on the first address and the second address; and send a single-ended detection packet to the second device based on establishment of the single-ended detection session, wherein a source address and a destination address of the single-ended detection packet are the second address; and
a detection module, configured to detect a running status of the second device based on a transmission status of the single-ended detection packet.

15. The apparatus according to claim 14, wherein the obtaining module is configured to: receive a dynamic host configuration protocol offer DHCP offer packet sent by the second device, wherein the DHCP offer packet comprises the first address of the second device; and extract the first address of the second device from the DHCP offer packet.

16. The apparatus according to claim 14 or 15, wherein the sending module is further configured to return a request packet to the second device based on the DHCP offer packet sent by the second device, wherein the DHCP offer packet indicates, to the first device, the second address that can be allocated by the second device, and the request packet indicates that the first device selects the second address allocated by the second device; and the obtaining module is further configured to: receive an acknowledgment packet returned by the second device based on the request packet, wherein the acknowledgment packet indicates duration for using the second address by the first device; verify the second address based on the acknowledgment packet; and perform, based on that a verification result of the second address indicates that the first device is allowed to use the second address, an operation of creating the single-ended detection session.

17. The apparatus according to any one of claims 14 to 16, wherein the detection module is configured to determine, based on that the single-ended detection packet returned by the second device is received in a first time period, that the running status of the second device is normal; or determine, based on that the single-ended detection packet returned by the second device is not received in the first time period, that the running status of the second device is abnormal.

18. The apparatus according to any one of claims 14 to 17, wherein the apparatus further comprises: a setting module, configured to set the second address as an invalid address based on that the running status of the second device is abnormal.

19. The apparatus according to any one of claims 14 to 18, wherein the sending module is further configured to send a single-ended detection packet to the second device again based on that the running status of the second device is abnormal; and the detection module is further configured to determine the running status of the second device based on a transmission status of the single-ended detection packet.

20. The apparatus according to claim 19, wherein the sending module is further configured to apply to the second device for a third address based on that the running status of the second device is normal and the second address is the invalid address.

21. The apparatus according to any one of claims 14 to 20, wherein the first address is a medium access control MAC address.

22. The apparatus according to any one of claims 14 to 21, wherein the single-ended detection packet is a single-ended bidirectional forwarding detection BFD packet or a single-ended network quality analysis NQA packet.

23. The apparatus according to any one of claims 14 to 22, wherein the DHCP is a dynamic host configuration protocol for internet protocol version 6 DHCPv6.

24. The apparatus according to any one of claims 14 to 23, wherein the second device is further used as a gateway.

25. The apparatus according to claim 24, wherein the second device is one of a plurality of gateways, and a virtual router redundancy protocol VRRP is deployed between the plurality of gateways.

26. The apparatus according to any one of claims 14 to 25, wherein the sending module is configured to: configure a session parameter of the single-ended detection session, wherein the session parameter comprises a detection periodicity and a quantity of detection times; and send the single-ended detection packet based on the session parameter.

27. A computer device, wherein the computer device comprises a processor, and the processor is configured to load and execute at least one instruction, to enable the computer device to implement the device detection method according to any one of claims 1 to 13.

28. The computer device according to claim 27, wherein the computer device further comprises a memory, the memory is coupled to the processor, and the memory stores the at least one instruction.

29. A computer-readable storage medium, wherein the computer-readable storage medium stores at least one instruction, and the instruction is loaded and executed by a processor to implement the device detection method according to any one of claims 1 to 13.

30. A computer program product, comprising a computer program, wherein the computer program is loaded and executed by a processor to implement the method according to any one of claims 1 to 13.
